# EUROPEAN PATENT SPECIFICATION

(11) **EP 1 248 034 B1**
(45) Date of publication and mention of the grant of the patent: **13.12.2006**
(21) Application number: 02007675.8
(22) Date of filing: 04.04.2002
(51) Int. Cl.: F21V 14/02, F21V 14/08, F21W 101/10

(54) **Lamp device for vehicle**
Fahrzeugscheinwerfer
Projecteur pour véhicule

(30) Priority: 04.04.2001 JP 2001105302
(43) Date of publication of application: 09.10.2002
(73) Proprietor: ICHIKOH INDUSTRIES, LTD., Tokyo 144-0022 (JP)
(72) Inventor: Akizuki, Kunio, Isehara-shi, Kanagawa-ken 259-1192 (JP); Nakabayashi, Yasumitsu, Isehara-shi, Kanagawa-ken 259-1192 (JP)
(74) Representative: Grünecker, Kinkeldey, Stockmair & Schwanhäusser Anwaltssozietät

(56) References cited:
- EP-A- 1 052 448
- EP-A- 1 054 211
- DE-A1- 1 809 029
- DE-A1- 19 857 341
- FR-A- 1 376 728
- PATENT ABSTRACTS OF JAPAN vol. 1999, no. 08, 30 June 1999 (1999-06-30) -& JP 11 066912 A (STANLEY ELECTRIC CO LTD), 9 March 1999 (1999-03-09)

## Description

### FIELD OF THE INVENTION

The present invention relates to a lamp device for vehicles in which it is possible to switch the light distribution pattern by moving the valve with respect to the reflector.

### BACKGROUND OF THE INVENTION

A prior art lamp device of this type has been disclosed, for example, in Japanese Patent Application Laid-Open No. 2001-35211 (EP 1052448 A2).

The head lamp disclosed in the above-mentioned reference uses the high intensity discharge (HID) valve as a light source. This head lamp is configured such that it is possible to switch with a single HID valve between a light distribution pattern of a low beam and a light distribution pattern of a high beam, and securely prevent the glare.

A lamp device according to the preamble of claim 1 is known from DE 18 09 029 A1. In particular this known lamp device comprises a first and a second shade, whereas the second shade is moveable. By moving said second shade towards or away from said first shade an opening between the two shades can be formed through which a lightening luminous flux can flow. This known lamp device, however, does not effectively utilize the lightening luminous flux emitted from the light source.

### SUMMARY OF THE INVENTION

It is an object of the invention to provide a lamp device which can effectively utilize a lighting luminous flux emitted from one valve in correspondence to a light distribution pattern.

The above object is achieved by a lamp device as defined in claim 1. Preferred embodiments are subject to the dependent claims.

Other objects and features of this invention will become apparent from the following description with reference to the accompanying drawings.

### BRIEF DESCRIPTION OF THE DRAWINGS

Fig. 1A is an explanatory diagram of a light distribution pattern when the beam is set low which shows a lamp device according to an embodiment of the present invention,
Fig. 1B is an explanatory diagram along a line B-B in Fig. 1C, which shows a reflection range of a lighting luminous flux in a reflector,
Fig. 1C is an explanatory diagram which shows a relationship among a valve, a window and the reflector when the beam has been set low,
Fig. 2A is an explanatory diagram of a light distribution pattern when the beam is set high which shows a lamp device according to an embodiment of the present invention,
Fig. 2B is an explanatory diagram along a line B-B in Fig. 2C, which shows a reflection range of a lighting luminous flux in a reflector,
Fig. 2C is an explanatory diagram which shows a relationship among a valve, a window and the reflector when the beam has been set high,
Fig. 3A is a side elevational view which shows a valve peripheral configuration when the beam has been set low,
Fig. 3B is a vertical cross sectional view which shows the valve peripheral configuration when the beam has been set low,
Fig. 4A is a side elevational view which shows the valve peripheral configuration when the beam has been set high in the same manner,
Fig. 4B is a vertical cross sectional view which shows the valve peripheral configuration when the beam has been set high,
Fig. 5A is a side elevational view of a shade,
Fig. 5B is a plan view of a shade,
Fig. 5C is a cross sectional view along a line A-A in Fig. 5A,
Fig. 6 is an explanatory diagram which compares amoving position of a light source between a HID valve and an H4 valve with double filaments in the same manner, that is, an explanatory diagram which shows a relationship between the position of the light source at a time when the HID valve is at the low beam and the high beam, and positions of the respective filaments of the H4 valve, and
Fig. 7 is an explanatory diagram which shows a relationship of relative positions among the light source, the window and the reflector in a state in which the window is open, in the same manner.

### DETAILED DESCRIPTIONS

An embodiment of the lamp device according to this invention will be explain below with reference to the accompanying drawings.

The lamp device according to this invention is configured such as to be mounted to a motor vehicle sectioned in a left-hand traffic. Accordingly, a lamp device mounted to a motor vehicle sectioned in a right-hand traffic can be configured so as to be mirror reversed with respect to the lamp device according to this embodiment.

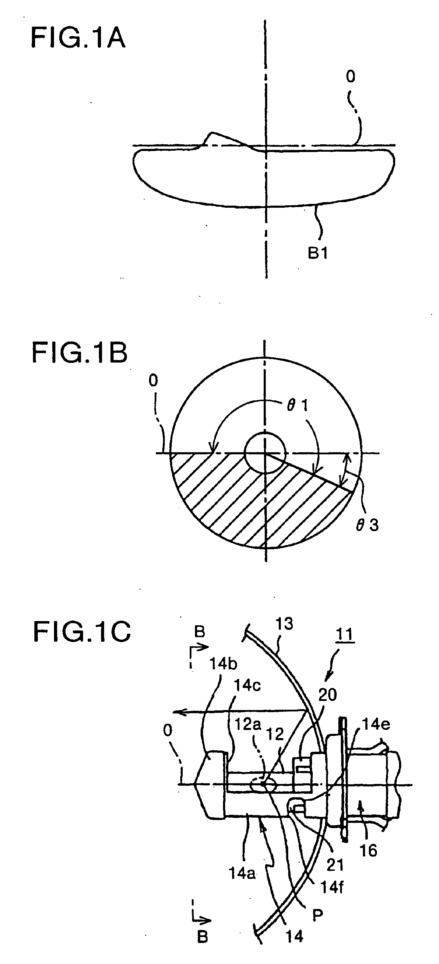

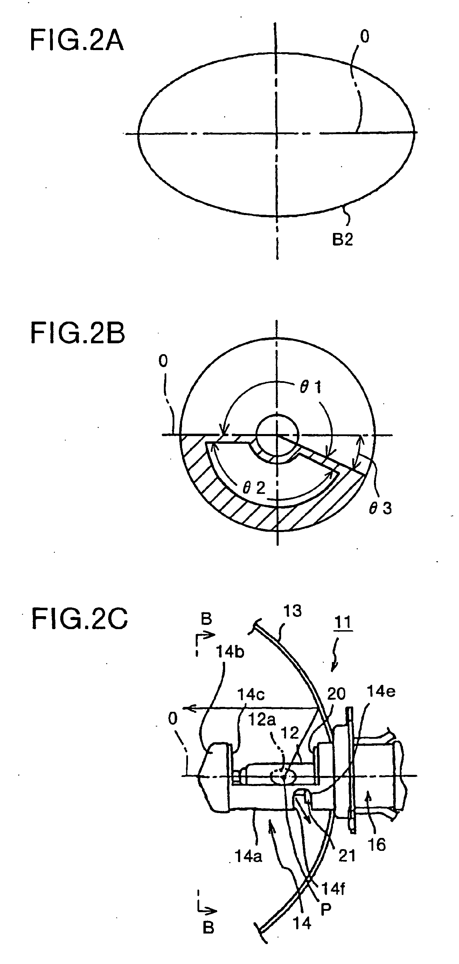

Fig. 1A is an explanatory diagram of a light distribution pattern when the beam is set low which shows a lamp device according to an embodiment of the present invention. Fig. 1B is an explanatory diagram along a line B-B in Fig. 1C, which shows a reflection range of a lighting luminous flux in a reflector. Fig. 1C is an explanatory diagram which shows a relationship among a valve, a window and the reflector when the beam has been set low. Fig. 2A is an explanatory diagram of a light distribution pattern when the beam is set high which shows a lamp device according to an embodiment of the present invention. Fig. 2B is an explanatory diagram along a line B-B in Fig. 2C, which shows a reflection range of a lighting luminous flux in a reflector . Fig. 2C is an explanatory diagram which shows a relationship among a valve, a window and the reflector when the beam has been set high.

As shown in Figs. 1A to 1C and Figs. 2A to 2C, the lamp device 11 is provided with a valve 12 which emits a lighting luminous flux, a reflector 13 which reflects the lighting luminous flux emitted from the valve 12, a shade (fixed shade) 14 which restricts the lighting luminous flux outgoing to the reflector 13 by covering a predetermined range of the valve 12, and a drive section case 16 held in a valve holder (not shown) which mounts the valve 12 thereto and integrally or independently provided in the reflector 13.

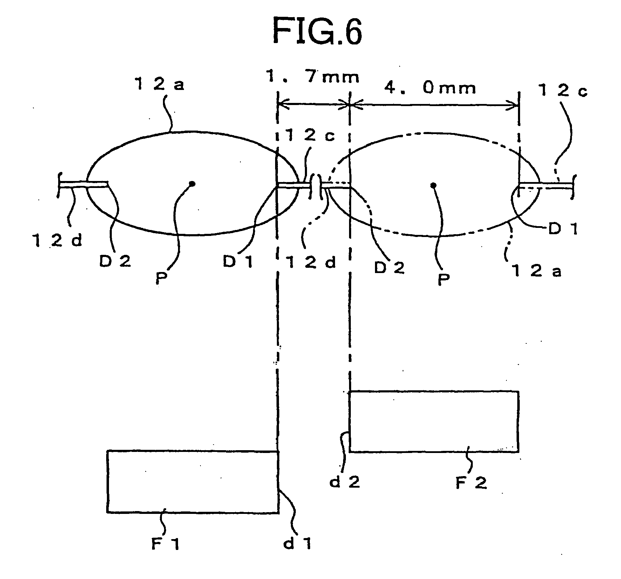

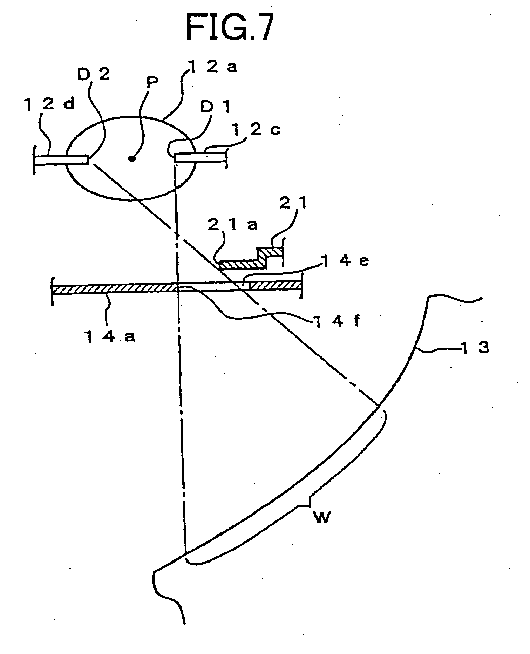

The valve 12 may be the HID valve (also called as a discharge lamp or a xenon arc lamp) corresponding to a standard of H4 valve, an H12 valve or the like. For explanation purpose, it will be assumed that the valve 12 is the HID valve corresponding to the standard of the H4 valve. The valve 12 is, as shown in Figs . 3B and 4B, provided with a glass vessel 12b internally provided with a light emitting section (single light source) 12a, a power source line 12c in which a front end D1 (refer to Figs. 6 and 7) is connected to one end of the light emitting section 12a and a base end is protruded from a base end of the glass vessel 12b, a power source line 12d in which a base end D2 (refer to Figs. 6 and 7) is connected to another end of the light emitting section 12a and a front end is protruded from a front end of the glass vessel 12b, and an earth line 12e connected to a front end of the power source line 12d.

The reflector 13 is formed in a free curved surface around an optical axis O corresponding to a center axis, or in a rotation parabolic surface or the like, and the surface is set to a reflection surface. When the light emitting section 12a is at a low beam position (details are described later), the lighting luminous flux emitted from a center P of the light source (light emitting section 12a) is reflected by the reflector 13, whereby a light distribution pattern B1 of the low beam shown in Fig. 1A is obtained. Further, when the light emitting section 12a is at a high beam position (details are described later), the lighting luminous flux emitted from the light source center P is reflected to the reflector 13, whereby a high beam light distribution pattern B2 shown in Fig. 2A is obtained.

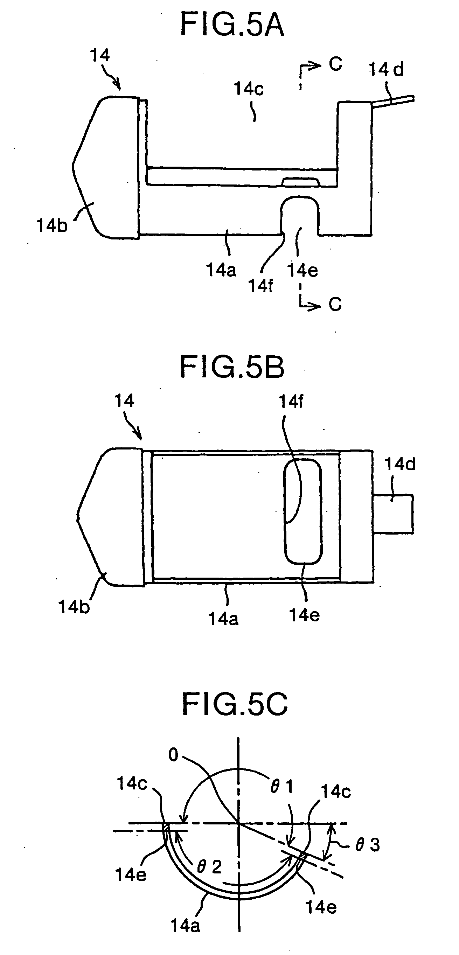

The shade 14 is provided, as shown in Figs. 5A and 5, with a shade main body 14a which has a circular arc shape of the like positioned below the optical axis O of the valve 12, and a cap 14b emitted from a front end of the valve 12 and which shuts the lighting luminous flux directly outgoing to a lens which is omitted to be shown. The cap 14b commonly serves as a blindfold making the front end of the valve 12 invisible from the external section.

The shade main body 14a is provided for the purpose of shutting the lighting luminous flux forming an upward glare light due to the reflection in the lower section of the reflector 13, that is, the lighting luminous flux outgoing from the valve 12 toward the lower side of the reflector 13. An opening 14c for opening from a section slightly below the optical axis O toward an upper section, and a window 14e formed substantially all the width in a width direction are respectively opened in the shade main body 14a. Further, a hook section 14d fixed to a drive section case 16 is integrally formed in the shade main body 14a. One (which becomes reverse in correspondence to a placing position in right and left of a vehicle) of cut lines in both sides of the opening 14c is an angle of center θ3 down from the horizontal line, as shown in Fig. 5C. Accordingly, an area θ3 moving downward from the horizontal line including the optical axis O in an effective reflection area θ1 shown in Figs. 1B and 2B is determined (in this embodiment, θ3 = 15 degrees).

The drive section case 16 corresponds to a valve holder which has a moving mechanism. The drive section case 16 is provided with a substantially closed-end cylindrical holder 17 which opens the valve 12 side, a waterproofing tube 18 which covers an opening (not shown) formed in the holder 17, a solenoid 19 provided in an inner section in a side of a base section of the holder 17, a slider 20 provided in an inner section in a side of a front end of the holder 17 and connected to an axis 19a of the solenoid 19 so as to move along a direction of the optical axis within the holder 17, and a shutter 21 fixed to the slider 20.

The valve 12 is fixed to the slider 20. As a result, the valve 12 is held in the reflector 13 via the valve holder so as to freely move in the direction of the optical axis. The shade 14 is fixed to the holder 17.

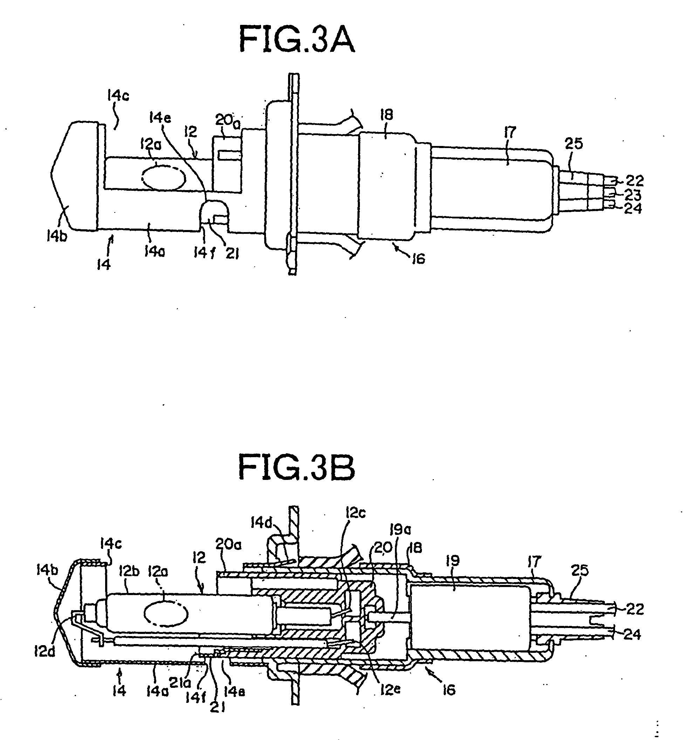

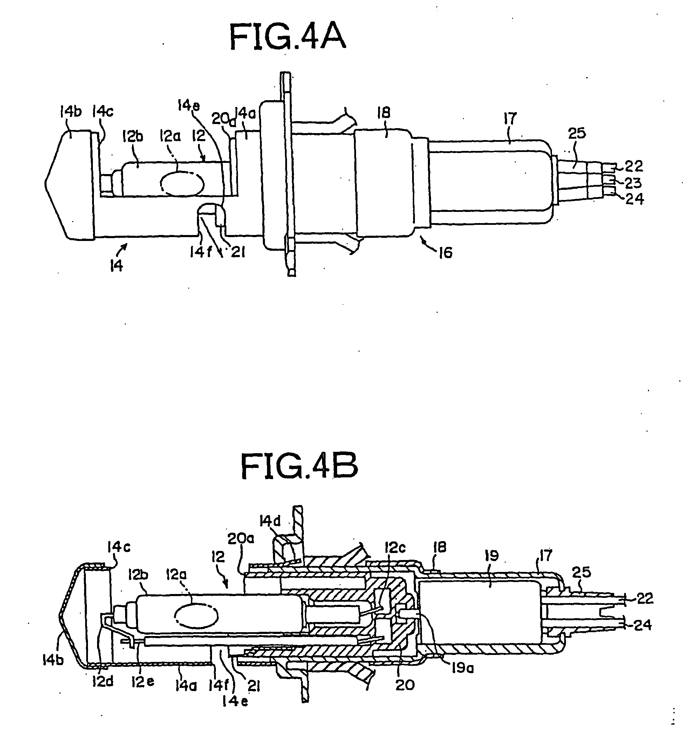

The solenoid 19 employs a two-way solenoid. This solenoid 19 is configured such that the axis 19a contracting from an extended state (a state shown in Fig. 3B) and on the contrary the axis 19a extends from the contracting state (a state shown in Fig. 4B), when an electric current is supplied. The solenoid 19 is configured such that the axis 19a extends so as to stop at a predetermined position (a position shown in Fig. 3B), and on the contrary the axis 19a contracts so as to stop at a predetermined position (a position shown in Fig. 4B). The solenoid 19 is configured such that it is not necessary to supply the electric current thereto because the stop state is kept by an internal magnet after the axis 19a stops at the predetermined position. Accordingly, since the lamp device need only a small amount of electric power and is required to supply the electric current fro a shorter time, the solenoid 19 is not heated within the holder 17.

Electric power supplying wiring cords 22 to 24 for supplying the electric current are connected to the solenoid 19. In the wiring cords 22 to 24, an airtight property between the interior section of the holder 17 and the external section is kept by a guide packing 25. Further, a waterproof property is kept by a waterproofing tube 18. Accordingly, the solenoid 19 in the internal section is not affected by the water.

An oscillating amount of the axis 19a of the solenoid 19 is made substantially coincide with an apart distance (standard) between the filaments F1 and F2 of the so-called double filament type H4 valve, as shown in Fig. 6. That is, in the valve 12, it is set such that a distance between a front end D1 of a lead wire 12c at a time when the light emitting section 12a is positioned (shown by a solid line in Fig. 6) at the low beam position (the first light source position), and a base end D2 of a lead wire 12d at a time when the light emitting section 12a is positioned (shown by a double-dot chain line in Fig. 6) at the high beamposition (the second light source position) becomes 1.7 mm. On the contrary, in the valve 12, a distance between front ends of the respective lead wires 12c and 12d is standardized and set to 4.0 mm. As a result, a moving amount of the axis 19a of the solenoid 19 is 1.7 + 4.0 = 5.7 mm.

A position of the front end D1 of the lead wire 12c at a time when the light emitting section 12a is positioned at the low beam position coincides with a position of a virtual base end surface d1 of the filament F1. Further, a position of the base end D2 of the lead wire 12d at a time when the light emitting section 12a is positioned at the high beam position coincides with a position of a virtual base end surface d2 of the filament F2. Therefore, it is possible to replace the H4 valve and the valve 12 (including the drive section case 16 corresponding to the shade 14 and the valve holder) with each other. In other words, the reflector 13 can be commonly used between the valve 12 and the H4 valve.

A "play" allowing a relative change of angle, that is, a change of angle of the axis 19a is provided between the slider in the side of the valve 12 and the shutter 21, and holder 17 in the side of the valve holder. The "play" is configured such that even when the axis 19a does not necessarily coincide with the optical axis O due to a mounting state of the solenoid 19, it is possible to securely transmit the drive force of the solenoid 19 to the slider 20. Therefore, it is possible in the lamp device to slide the valve 12 fixed to the slider 20 in the direction of the optical axis O (a longitudinal direction, that is, a lateral direction in the drawing) by driving the solenoid 19.

A valve rear shade section 20a extended to a rear upper section of the valve 12 is integrally formed in an upper section of the front end of the slider 20. The valve rear shade section 20a is provided for the purpose of shielding the light diffusing obliquely rearward from the valve 12 on the basis of a predetermined light distribution property. The valve rearward shade section 20a integrally moves with the valve 12 interlocking with the operation of the solenoid 19. Therefore, it is possible in the lamp device to always shield the light diffusing obliquely rearward from the valve 12 on the basis of the same light distribution property.

The shutter 21 is provided with a width larger than that of the window 14e, and is formed so as to cover an upper section (inner side) of the window 14e in cooperation with the slider 20 at a time when the axis 19a is in an extending state. The shutter 21 opens at least an upper section (inner side) close to a front section of the window 14e at a time when the axis 19a is in a contracting state.

The lamp device according to this embodiment has the configuration mentioned above, and an operation thereof will be explained below.

The state in which the axis 19a extends due to the operation of the solenoid 19 corresponds to the light distribution state of the low beam. At this time, the valve 12 and the shutter 21 are positioned at the first position, as shown in Figs. 1A and 3A. The light emitting section 12a is positioned at the first light source position, as shown by a solid line in Fig. 6. That is, the light emitting position 12a is positioned at a position apart from the reflector 13, and on the contrary, the window 14e is closed. As a result, as shown in Fig. 1B, a part of the lighting luminous flux emitted from the valve 12 is shielded by the shade 14 and the shutter 21, whereby the lighting luminous flux is reflected by utilizing the effective reflection area θ1 slightly protruding from the horizontal position including the optical axis O in all the reflection area (360 degrees) of the reflector 12 (a protruding direction is different in correspondence to setting in right or left of the vehicle body), transmits through a lens (not shown), and lights up the forward section of the vehicle body on the basis of the light distribution pattern mainly having the lower section of the horizontal line including the optical axis O (the light distribution pattern of the low beam).

The state in which the axis 19a contracts due to the operation of the solenoid 19 corresponds to the light distribution state of the high beam. At this time, the valve 12 and the shutter 21 are positioned at the second position, as shown in Figs. 2A to 2C and Fig. 4A and 4B. The light emitting section 12a is positioned at the second light source position. That is, the light emitting position 12a is positioned at a position close to the reflector 13, and on the contrary, the window 14e is opened. As a result, as shown in Fig. 2B, a part of the lighting luminous flux emitted from the valve 12 is shielded by the shade 14, whereby the lighting luminous flux is reflected by utilizing the effective reflection area θ1 and simultaneously transmits through the window 14e, thereby being reflected by utilizing the second effective area θ2, transmits the lens (not shown), and lights up the forward section of the vehicle body on the basis of the light distribution pattern straddling substantially in all the circumferential direction (the light distribution pattern of the high beam), as shown in Fig 2A.

Therefore, the lamp device according to this embodiment can easily light up a near side in the forward section of the vehicle body in spite of the light distribution state of the high beam, and can effectively utilize the lighting luminous flux.

The shutter 21 is fixed to the slider 20. Therefore, the lamp device according to this embodiment is not necessarily provided with a specific moving mechanism (for example, a solenoid, a pulse motor, a control circuit and the like) whichmoves the shutter 21, it is possible to improve an accuracy of relative position between the light source position and the shutter, it is possible to prevent a turbulence of the light distribution from being generated by the movement of the shutter, and it is possible to inexpensively and securely achieve an effective utilization of the high beam light distribution statue.

Since the lamp device according to the invention is configured, as shown in Fig. 7, such that a light source center (a center of the light emitting section 12a) P is positioned in a forward side from an edge section 14f of the window 14e under the open state, it is possible to utilize a reflector section W which is nearest from the light source center P and has a lot of luminous flux as the effective reflection surface. In particular, since it is impossible to set the window 14e to be large in the configuration in which the moving amount of the valve is set to be small, it is advantageous in view of the configuration by utilizing the reflector section W in which the amount of luminous flux is most. Further, in the lamp device according to this embodiment, as shown by a solid line in Fig. 6, when the configuration is made such that the edge section 14f in the forward side of the window 14e is positioned on a vertical line of the front end D1 of the lead wire 12c, it is possible to further effectively utilize a depth range W which passes through the window 14e without being shielded by the front end 21a of the shutter 21 from the base end D2 of the lead wire 12d so as to reach the base section side of the reflector 13. According to this invention, the configuration may be made such that the window 14e is arranged below the valve 12.

The lamp device according to this embodiment can securely prevent an exposure by positioning the front end 21a of the shutter 21 when closing the window 14e in the side of the lighting direction rather than the window 14e so as to overlap with the shade main body 14a. In order to more securely prevent the exposure, the configuration may be made such as to overlap in a state of moving the shutter 21 apart from the shade main body 14a.

## Claims

1. A lamp device (11) for vehicles comprising:
a valve (12) which emits a lighting luminous flux;
a reflector (13) which reflects the lighting luminous flux emitted from a light source of the valve (12), the reflector (13) having an optic axis;
a shade (14) which covers a specific portions of the valve (12) to restrict the lighting luminous flux falling on the reflector (13);
a valve holder which holds the valve (12); and
a moving mechanism (16) which moves the valve holder along the optical axis (O);
**characterized in that** a window (14e) is formed in the shade (14), and that a shutter (21) is provided which opens or closes the window (14e) based on the movement of the valve (12),
wherein a part of the lighting luminous flux is introduced to the reflector (13) from the window (14e) when the shutter (21) opens the window (14e), and wherein the window (14e) is arranged in a lower section of a body of the vehicle from the light source (12a), and a center of the light source (P) at a time when the valve (12) and the shutter (21) move so as to open the window (14e) is positioned in a side in a lighting direction from an edge section (14f) positioned close to the lighting direction of the window (14e).

2. The lamp device according to claim 1, wherein the valve (12) is an HID valve, and moving positions of the light source (12a) substantially coincide with positions of the respective filaments in a double filament type valve.

3. The lamp device according to claim 1, wherein the front end of the shutter (21) overlaps from the window (14e) so as to overlap with the shade (14) when closing the window (14e) by the shutter (21).

4. A lamp device (11) according to claim 1, **characterized in that**,
said valve (12) which has a single light source (12a);
said valve holder holds the valve (12) in the reflector (13) so as to freely move in a direction of an optical axis (O); said shade (14) is a fixed shade fixed to the valve holder; and
said moving mechanism (16) is adapted to move the valve (12) and the shutter (21) in an interlocking manner between a first position and a second position,
wherein when the valve (12) and the shutter (21) are positioned at the first position, the light source (12a) is positioned at a first light source position, the shutter (21) closes the window (14e), and the lighting luminous flux from the light source (12a) is reflected by the reflector (13), whereby a first light distribution pattern is obtained, and
wherein when the valve (12) and the shutter (21) are positioned at the second position, the light source (12a) is positioned at a second light source position, the shutter (21) opens the window (14e), and the lighting luminous flux from the light source (12a) is reflected by the reflector (13), whereby a second light distribution pattern is obtained.

5. The lamp device according to claim 4, wherein the valve (12) is an HID valve, the first light source position substantially coincides with a position of a first filament in a double filament type valve, and the second light source position substantially coincides with a position of a second filament in the double filament type valve.

6. The lamp device according to claim 1 or 4, wherein the shutter (21) overlaps with the shade (14) in the edge of the window (14f) at a time when the window (14e) is closed

7. The lamp device according to claim 1 or 4, wherein the shutter is fixed to the moving mechanism.

8. The lamp device according to claim 1 or 4, wherein the moving mechanism (16) of the valve holder is constituted by a two-way solenoid (19).

9. The lamp device according to claim 1 or 4, wherein a waterproofing tube is provided in the valve holder.

10. The lamp device according to claim 1 or 4, wherein a play allowing a relative change of angle is provided between a side of the valve (12) and the shutter (21), and a side of the valve holder.

11. The lamp device according to claim 1 or 4, wherein a valve rear shade section which moves integrally with the valve is integrally formed in the moving mechanism.

## Patentansprüche

1. Lampenvorrichtung (11) für Fahrzeuge, die umfasst:
ein Ventil (12), das einen Beleuchtungslichtstrom emittiert;
einen Reflektor (13), der den von einer Lichtquelle des Ventils (12) emittierten Beleuchtungslichtstrom reflektiert, wobei der Reflektor (13) eine optische Achse hat;
eine Blende (14), die bestimmte Abschnitte des Ventils (12) abdeckt, um den auf den Reflektor (13) fallenden Beleuchtungslichtstrom einzuschränken;
einen Ventilhalter, der das Ventil (12) hält; und
einen Bewegungsmechanismus (16), der den Ventilhalter entlang der optischen Achse (O) bewegt;
**dadurch gekennzeichnet, dass**
ein Fenster (14e) in der Blende (14) ausgebildet ist und **dadurch**, dass ein Verschluss (21) vorhanden ist, der das Fenster (14e) auf Basis der Bewegung des Ventils (12) öffnet oder schließt,
wobei ein Teil des Beleuchtungslichtstroms über das Fenster (14e) auf den Reflektor (13) geleitet wird, wenn der Verschluss (21) das Fenster (14e) öffnet, und wobei das Fenster (14e) in einem von der Lichtquelle (12a) her unteren Abschnitt eines Körpers des Fahrzeugs angeordnet ist und eine Mitte der Lichtquelle (P) zu einer Zeit, zu der sich das Ventil (12) und der Verschluss (21) bewegen, um das Fenster (14e) zu öffnen, an einer Seite in einer Beleuchtungsrichtung von einem Randabschnitt (14f) her angeordnet ist, der nah an der Beleuchtungsrichtung des Fensters (14e) angeordnet ist.

2. Lampenvorrichtung nach Anspruch 1, wobei das Ventil (12) ein HID-Ventil ist und Bewegungspositionen der Lichtquelle (12a) im Wesentlichen mit Positionen der jeweiligen Leuchtfäden in einem Doppelfaden-Ventil übereinstimmen.

3. Lampenvorrichtung nach Anspruch 1, wobei das vordere Ende des Verschlusses (21) von dem Fenster (14e) her überlappt und die Blende (14) überlappt, wenn das Fenster (14e) durch den Verschluss (21) verschlossen wird.

4. Lampenvorrichtung (11) nach Anspruch 1, **dadurch gekennzeichnet, dass**
das Ventil (12) eine einzelne Lichtquelle (12a) hat;
der Ventilhalter das Ventil (12) in dem Reflektor (13) so hält, dass es sich in einer Richtung einer optischen Achse (O) bewegt;
die Blende (14) eine feststehende Blende ist, die an dem Ventilhalter befestigt ist;
der Bewegungsmechanismus (16) so eingerichtet ist, dass er das Ventil (12) und den Verschluss (21) gekoppelt zwischen einer ersten Position und einer zweiten Position bewegt,
wobei, wenn sich das Ventil (12) und der Verschluss (21) an der ersten Position befinden, die Lichtquelle (12a) an einer ersten Lichtquellenposition angeordnet ist, und der Verschluss (21) das Fenster (14e) verschließt und der Beleuchtungs-Lichtstrom von der Lichtquelle (12a) durch den Reflektor (13) reflektiert wird, sodass ein erstes Lichtverteilungsmuster erzielt wird, und
wobei, wenn sich das Ventil (12) und der Verschluss (21) an der zweiten Position befinden, die Lichtquelle (12a) an einer zweiten Lichtquellenposition angeordnet ist, der Verschluss (21) das Fenster (14e) öffnet und der Beleuchtungs-Lichtstrom von der Lichtquelle (12a) durch den Reflektor (13) reflektiert wird, sodass ein zweites Lichtverteilungsmuster erzielt wird.

5. Lampenvorrichtung nach Anspruch 4, wobei das Ventil (12) eine HID-Ventil ist, die erste Lichtquellenposition im Wesentlichen mit einer Position eines ersten Leuchtfadens in einem Doppelfaden-Ventil übereinstimmt und die zweite Lichtquellenposition im Wesentlichen mit einer Position eines zweiten Leuchtfadens in dem Doppelfaden-Ventil übereinstimmt.

6. Lampenvorrichtung nach Anspruch 1 oder 4, wobei der Verschluss (21) die Blende (14) am Rand des Fensters (14f) zu einer Zeit überlappt, zu der das Fenster (14e) geschlossen ist.

7. Lampenvorrichtung nach Anspruch 1 oder 4, wobei der Verschluss an dem Bewegungsmechanismus befestigt ist.

8. Lampenvorrichtung nach Anspruch 1 oder 4, wobei der Bewegungsmechanismus (16) des Ventilhalters durch einen doppelt wirkenden Elektromagneten (19) gebildet wird.

9. Lampenvorrichtung nach Anspruch 1 oder 4, wobei eine Wasserdichtungsröhre in dem Ventilhalter vorhanden ist.

10. Lampenvorrichtung nach Anspruch 1 oder 4, wobei ein Spiel, das eine relative Winkeländerung zulässt, zwischen einer Seite des Ventils (12) und des Verschlusses (21) und einer Seite des Ventilhalters vorhanden ist.

11. Lampenvorrichtung nach Anspruch 1 oder 4, wobei ein Ventilrückseiten-Blendenabschnitt, der sich integral mit dem Ventil bewegt, integral in dem Bewegungsmechanismus ausgebildet ist.

## Revendications

1. Dispositif formant projecteur (11) pour véhicule, comprenant :
un tube électronique (12) qui émet un flux lumineux d'éclairage ;
un réflecteur (13) qui réfléchit le flux lumineux d'éclairage émis par une source de lumière du tube électronique (12), le réflecteur (13) ayant un axe optique ;
un cache (14) qui recouvre des parties spécifiques du tube électronique (12) pour limiter le flux lumineux d'éclairage tombant sur le réflecteur (13) ;
un porte-tube qui supporte le tube électronique (12) ; et
un mécanisme de déplacement (16) qui déplace le porte-tube le long de l'axe optique (0) ;
**caractérisé en ce qu'**une fenêtre (14e) est formée dans le cache (14), et **en ce qu'**il est prévu un obturateur (21) qui ouvre ou ferme la fenêtre (14e) en fonction du déplacement du tube électronique (12),
une partie du flux lumineux d'éclairage étant dirigée vers le réflecteur (13) à partir de la fenêtre (14e) lorsque l'obturateur (21) ouvre celle-ci, et la fenêtre (14e) étant disposée dans une partie inférieure de la carrosserie du véhicule par rapport à la source de lumière (12a), et un centre (P) de la source de lumière au moment où le tube électronique (12) et l'obturateur (21) se déplacent pour ouvrir la fenêtre (14e) étant situé d'un côté de la direction d'éclairage par rapport à une partie de bord (14f) située à proximité de la direction d'éclairage de la fenêtre (14e).

2. Dispositif formant projecteur selon la revendication 1, dans lequel le tube électronique (12) est un tube à décharge haute intensité HID, et des positions de déplacement de la source de lumière (12a) coïncident sensiblement avec des positions des filaments respectifs d'un tube électronique du type à deux filaments.

3. Dispositif formant projecteur selon la revendication 1, dans lequel l'extrémité avant de l'obturateur (21) dépasse de la fenêtre (14e) de manière à chevaucher le cache (14) lors de la fermeture de la fenêtre (14e) par l'obturateur (21).

4. Dispositif formant projecteur (11) selon la revendication 1, **caractérisé en ce que**
ledit tube électronique (12) comporte une source de lumière unique (12a) ;
ledit porte-tube supporte le tube électronique (12) dans le réflecteur (13) afin que celui-ci puisse être déplaçable librement dans la direction d'un axe optique (0) ;
ledit cache (14) est un cache fixe fixé sur le porte-tube ; et
ledit mécanisme de déplacement (16) est adapté pour déplacer le tube électronique (12) et l'obturateur (21) de manière interdépendante entre une première position et une seconde position,
dans lequel, lorsque le tube électronique (12) et l'obturateur (21) sont situés dans la première position, la source de lumière (12a) est située dans une première position, l'obturateur (21) ferme la fenêtre (14e) et le flux lumineux d'éclairage provenant de la source de lumière (12a) est réfléchi par le réflecteur (13), pour ainsi former un premier schéma de répartition de lumière, et
dans lequel, lorsque le tube électronique (12) et l'obturateur (21) sont situés dans la seconde position, la source de lumière (12a) est située dans une seconde position, l'obturateur (21) ouvre la fenêtre (14e) et le flux lumineux d'éclairage provenant de la source de lumière (12a) est réfléchi par le réflecteur (13), pour ainsi former un second schéma de répartition de lumière.

5. Dispositif formant projecteur selon la revendication 4, dans lequel le tube électronique (12) est un tube à décharge haute densité HID, la première position de la source de lumière coïncide sensiblement avec une position d'un premier filament d'un tube électronique du type à deux filaments, et la seconde position de la source de lumière coïncide sensiblement avec une position d'un second filament du tube électronique du type à deux filaments.

6. Dispositif formant projecteur selon la revendication 1 ou 4, dans lequel l'obturateur (21) recouvre le cache (14) jusqu'au bord (14f) de la fenêtre (14e) lorsque celle-ci est fermée.

7. Dispositif formant projecteur selon la revendication 1 ou 4, dans lequel l'obturateur est fixé au mécanisme de déplacement.

8. Dispositif formant projecteur selon la revendication 1 ou 4, dans lequel le dispositif de déplacement (16) du porte-tube est constitué par un solénoïde bidirectionnel (19).

9. Dispositif formant projecteur selon la revendication 1 ou 4, dans lequel un tube étanche à l'eau est prévu dans le porte-tube.

10. Dispositif formant projecteur selon la revendication 1 ou 4, dans lequel un jeu permettant un changement d'angle relatif est prévu entre un côté du tube électronique (12) et l'obturateur (21), et un côté du porte-tube.

11. Dispositif formant projecteur selon la revendication 1 ou 4, dans lequel une partie arrière du cache du tube, qui se déplace solidairement avec celui-ci, est formée solidairement du mécanisme de déplacement.
